# EUROPEAN PATENT APPLICATION

(11) **EP 4 599 912 A1**
(43) Date of publication of application: **13.08.2025**
(21) Application number: 25156708.7
(22) Date of filing: 07.02.2025
(51) Int. Cl.: B01D 21/00, B08B 9/093

(54) **STORAGE TANK SIPHON**

(30) Priority: 09.02.2024 US 202463551608 P
(71) Applicant: Stormwell Inc., Guelph ON N1H 7L6 (CA)
(72) Inventor: Neeb, Timothy Howard, Guelph, N1H 2L1 (CA); Powell, Carter, Puslinch, N0B 2J0 (CA); Zimmermann, Tristan, Guelph, N1H 2L4 (CA)
(74) Representative: Gee, Steven William

(57) **Abstract**

The disclosure is directed at a tank siphon (110) that is used to remove sediment from a bottom of a water storage tank (100) to improve a quality of the collected water. The siphon includes a tube portion (114) having a suction adapter (118) at one end of the tube portion; and a siphon tube receptacle (116) at the other end of the tube portion.

## Description

### CROSS-REFERENCE TO OTHER APPLICATIONS

The present disclosure claims priority from US Provisional Application No. 63/551,608 filed on February 9, 2024 which is hereby incorporated by reference.

### FIELD

The present disclosure relates generally to storage tanks. More particularly, the present disclosure relates to systems and devices for storage tank siphons that may be used for removing matter or sediment from water storage tanks.

### BACKGROUND

Water is a valuable resource and its conservation is important. Water may be collected and stored in storage tanks until required for end uses such as toilet flushing, laundry, irrigation, industrial processes, and other applications. The stored water typically offsets the demand on other water sources such as a municipal water source, a lake or a well. In some cases, rainwater or water harvesting may be needed where access to water is limited and/or existing water sources may be contaminated.

During water collection and storage, water storage tanks can and typically do accumulate sediment or other debris that may be disturbed when water enters the tanks or when water is pumped out of the storage system. This lowers the perceived or actual quality of the water that has been collected.

Larger conventional water storage systems may be cleaned manually to remove sediment or debris; however, this process may be dirty, difficult and/or time-consuming. In addition, the manual cleaning of large storage tanks may be hazardous requiring a person to enter inside the tank in order to clean it. In many water storage tanks, a presence of various tank fittings, valves, and other tank components typically do not allow for the installation of a low point drain that would allow sediment to be drained or removed from a bottom of the storage tank. As such, there is an unmet need in the art for a system or device to enable sediment and debris removal from water storage tanks.

Therefore, there is provided a novel storage tank siphon that may be used for removing matter or sediment from water storage tanks.

### SUMMARY

According to an aspect herein, there is provided systems and devices for storage tank siphons that may be used for removing matter from water storage tanks.

In one aspect, the siphon includes a siphon tube that is designed to receive a suction source at one end. The siphon may include a suction adapter that enables connection between the siphon tube and the suction source.

The other end of the siphon is positioned at a bottom of the storage tank such that sediment at the bottom of the storage tank can travel through the siphon tube when suction is applied at the other end. The positioning of the bottom end of the siphon may be via a set of lugs or the tube may rest on the bottom of the storage tank. The siphon tube may also include aeration holes to improve suction power. In another aspect of the disclosure, there is provided a tank siphon including a tube portion including a suction adapter at one end of the tube portion; and a siphon tube receptacle at the other end of the tube portion.

In another aspect, the suction adapter is attached to the tube portion via a friction fit. In yet another aspect, the suction adapter includes a fitting for receiving a suction source. In a further aspect, the fitting is stepped to receive different sized suction sources. In yet a further aspect, siphon tube receptable includes a notched area. In another aspect, the tube portion includes a set of aeration holes.

In yet another aspect of the disclosure, there is provided a sediment collection apparatus for a water storage tank including a tank siphon including a tube portion including a suction adapter at one end of the tube portion; and a siphon tube receptacle at the other end of the tube portion; wherein the siphon tube receptable is positioned at a bottom of the water storage tank and the suction adapter extends through an upper surface of the water surface tank.

In a further aspect, the suction adapter is attached to the tube portion via a friction fit. In yet another aspect, the suction adapter includes a fitting for receiving a suction source. In yet a further aspect, the fitting is stepped to receive different sized suction sources. In another aspect, the siphon tube receptable includes a notched area. In an aspect, the tube portion includes a set of aeriation holes.

### BRIEF DESCRIPTION OF FIGURES

Other aspects and features of the embodiments of the system and method will become apparent to those ordinarily skilled in the art upon review of the following description of specific embodiments in conjunction with the accompanying figures.

Embodiments of the system and method will now be described, by way of example only, with reference to the attached Figures, wherein:
Figure 1 is a perspective view of a water storage tank that includes a siphon according to an embodiment herein;
Figure 2 is a perspective view of the water storage tank of Figure 1 with a portion cut away to show the siphon;
Figure 3 is a perspective view of the water storage tank of Figure 1 with an expanded view of the suction adapter and the siphon receptacle;
Figure 4 is side view of the water storage tank of Figure 1 with a portion cut away to show the siphon;
Figure 5 is a top view of the water storage tank of Figure 1 with the same portion cut away as Figure 4; and
Figures 6A to 6C are perspective views of another embodiment of a storage tank siphon with expanded views.

### DETAILED DESCRIPTION

The following description, with reference to the accompanying drawings, is provided to assist in understanding the example embodiments. The following description includes various specific details to assist in that understanding but these are to be regarded as merely examples. Accordingly, those of ordinary skill in the art will recognize that the various embodiments described herein, and changes and modifications thereto, can be modified without departing from the scope and spirit of the disclosure and their equivalents. In addition, descriptions of well-known functions and constructions may be omitted for clarity and conciseness.

The terms and words used in the following description and claims are not limited to their bibliographical meanings, but are meant to be interpreted in context and used to enable a clear and consistent understanding.

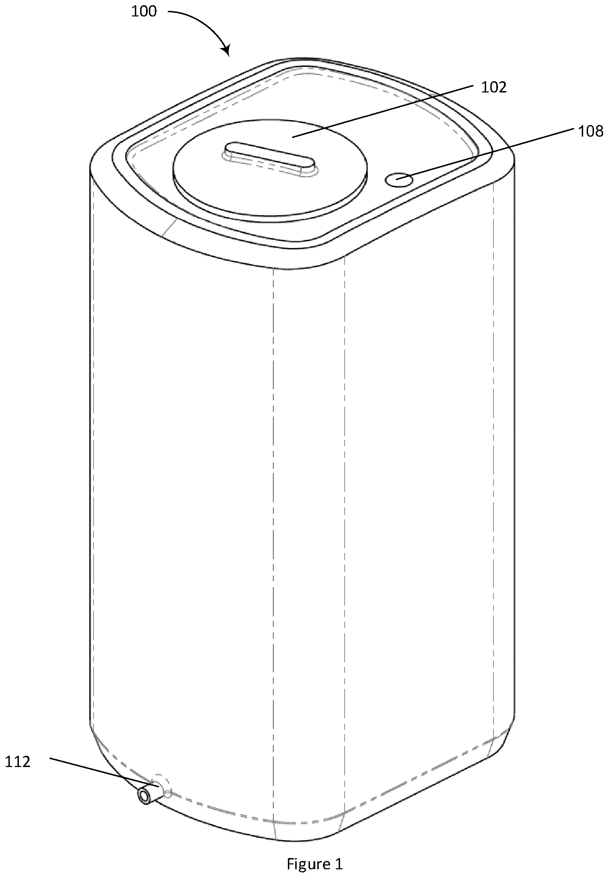

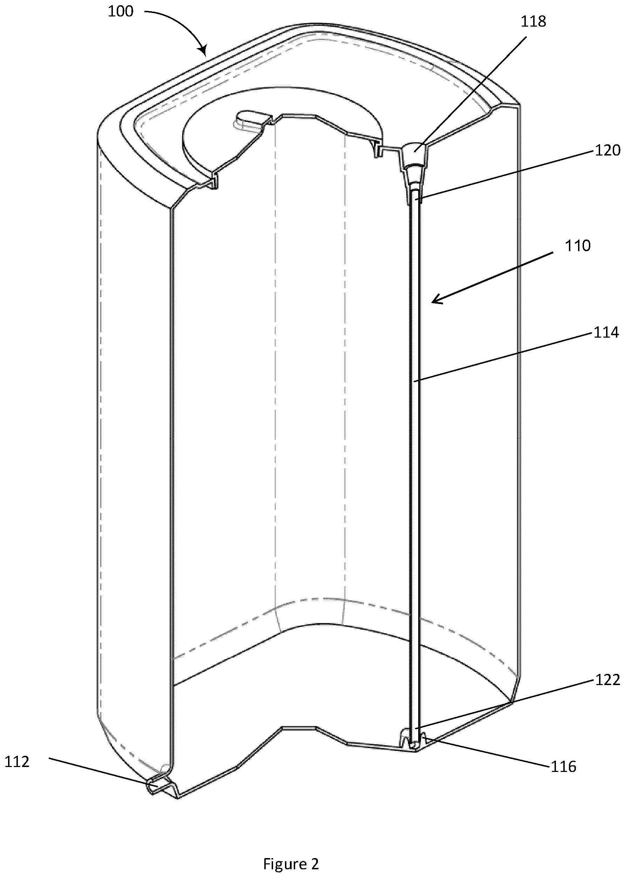

Figure 1 is a perspective view of a water storage tank 100 while Figure 2 is a perspective view of the water storage tank 100 with a portion cut away to show a siphon 110 in more detail.

As shown in Figure 1, the storage tank 100 includes a removable cover 102 that covers or protects an opening (not shown) for receiving water. In some embodiments, water may be poured into the storage tank via the opening and in other embodiments, the cover 102 may be removed and water, such as, but not limited to, rainwater, may be collected through the opening. In further embodiments, the storage tank 100 may be part of a water collection system that includes other components that direct water towards the opening of the storage tank for collection.

The top of the storage tank 100 includes a hole 108 through which one end of a siphon tube 110 (shown in more detail in Figure 2) may be inserted or extended through. In the current embodiment, a water outlet 112 is located at a bottom of the storage tank 100 where water that has been collected in the storage tank may be accessed. In some embodiments, a hose may be attached to the water outlet 112 while in other embodiments, a tap may be attached. In other embodiments, there the storage tank 100 may not include a water outlet whereby the water can be accessed in a different manner.

In use, the water storage tank 100 collects and stores water though the opening which is covered by the cover 102. As will be understood, the water storage tank 100 may be of any size depending on the design or water requirements. For example, a water storage tank designed for domestic use will likely be smaller than one designed for industrial use.

As more clearly shown in Figure 2, the siphon 110 includes a siphon tube 114 that has a siphon tube receptacle 116 at one end 122 and a suction adapter 118 at an opposite end 120 of the siphon tube 114. The siphon tube receptacle end 116 is located proximate a bottom of the storage tank 100 while the suction adapter 118 fts into, and sometimes, through the hole 108.

In one embodiment, the suction adapter 118 may have a shape complementary to the second end 120 of the siphon tube 114 to provide a friction fit coupling between the suction adapter 118 and the siphon tube 114 to reduce the flow of air or other fluids through the connection. Other methods of connecting the suction adapter 118 and the second end 120 are contemplated including integrating the suction adapter into the siphon tube or designing the suction adapter as part of the siphon tube. In some embodiments, the connection or coupling between suction adapter 118 and the second end 120 is airtight. In other embodiments, the suction adapter 118 may be adhered to the second end 120. In some embodiments, the suction source may be connected directly to the siphon tube 114 without the need for the suction adapter whereby the second end 120 extend into or through the hole 108.

After water has been collected in the storage tank 100, sediment and debris will naturally collect at the bottom of the storage tank 100, however, in some situations, the sediment may attach to the sides of the storage tank 100. When there is a need to clean the storage tank, the sediment present on the inside walls of tank 100 may be wiped off or forced off using a stream of water which may cause further sediment to fall to the bottom of the storage tank.

When necessary, the siphon 110 is used to remove debris, sediment or the like near or at the bottom of the storage tank 100. In order to remove the debris or sediment, a suction source is coupled to the suction adapter 118 (or directly to the siphon tube 114 when there is no suction adapter 118) to apply suction to the siphon 110. One example of a suction source is a wet/dry vacuum.

The applied suction draws material within the storage tank 100, such as sediment on the floor or bottom of the storage tank 100, out of the storage tank 100 through the siphon tube receptacle 116, the siphon tube 114 and the suction adapter 118 (when present). In some embodiments, depending on the size, shape, and position of the siphon tube receptacle 116 and/or the siphon tube 114, the material drawn out of the storage tank 100 may include both water and sediment.

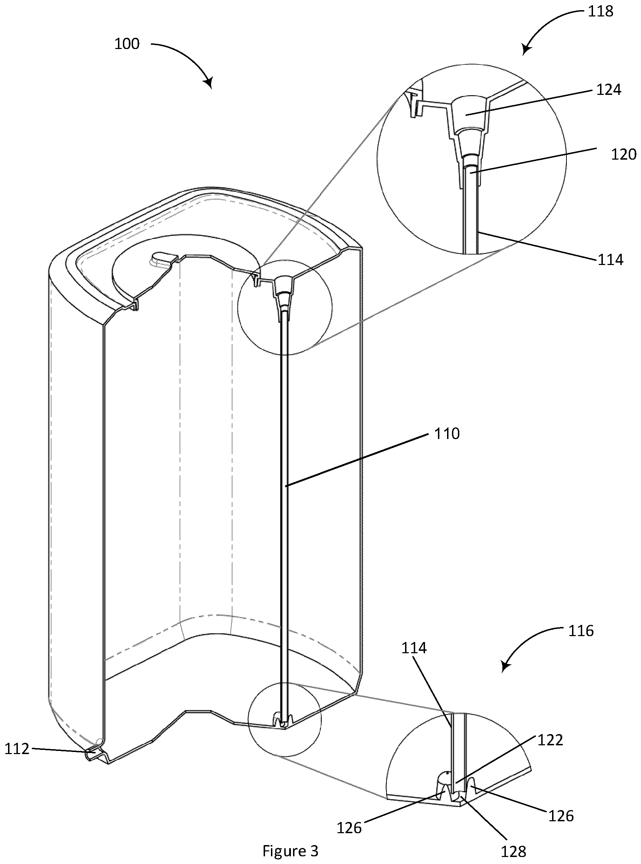

Figure 3 is another perspective view of the water storage tank 100 with expanded views of the connection between the suction adapter 118 and the second end 120 of the siphon tube 114 and the connection between the siphon receptacle 116 and the first end 122 of the siphon tube 114.

As shown in the embodiment of Figure 3, the suction adapter 118 includes a fitting 124 (or suction coupling end) having a size and a shape to allow the suction adapter 118 to be coupled to or receive a suction source. The shape of suction adapter 118 (or fitting 124) may be stepped such that the suction adapter 118 is capable of receiving different sized suction sources enabling the siphon to be coupled to different sized suction device nozzles. In some embodiments, a portion of the fitting 124 may be located external to the storage tank 100 to form a continuous passageway from the siphon receptacle 116 to the exterior of the storage tank 100 via the siphon tube 114.

In the embodiment of Figure 3, the siphon receptacle 116 sits, or rests, within a plurality of lugs 126 extending from a bottom of the storage tank 100. The lugs 126 hold the siphon tube 114 in place when it is installed within the storage tank 100. In some embodiments, the plurality of lugs 126 may be formed integrally with the bottom of the storage tank 100 such that the lugs 126 hold or support the siphon tube 114 to be in a vertical orientation. In alternative embodiments, any or all of the plurality of lugs 126 may be formed individually as discrete components and coupled to, fastened to, or adhered to the bottom of the storage tank 100. In some embodiments, the lugs 126 may form part of or the entirety of the siphon receptacle 116.

The plurality of lugs 126 are positioned to retain, or secure, the siphon tube 114 in position on the bottom of the storage tank 100 and to vertically align the siphon tube during installation to secure the bottom of siphon tube 114 within the storage tank 100. The lugs 126 may also provide or allow for a clearance or spacing between the first end 122 of the siphon tube 114 and the bottom of the water storage tank 100. This allows for sediment to be sucked into the siphon tube 114 and to provide improved, optimal or maximum suction. The plurality of lugs 126 may also support the bottom of the siphon 110 off the base or bottom of the storage tank 100. The lugs may support the bottom of the siphon 110 at a distance that positions the first end 122 of the siphon 110 below the highest water level after drain down in the storage tank to ensure or improve the draw of sediment and/or water up the siphon tube 114. The clearances between the bottom of the siphon 114 and the bottom of the storage tank 100 are minimized or reduced to facilitate maximum or a high level of water removal from the surface of bottom of the storage tank 100 which further enhances removal of debris and sediment. The spacings between the lugs 126 are positioned to maximize or improve available suction area into the first end of the siphon tube 122 to improve suction and flow rate of drawdown. However, it is understood that different applications and storage tank size necessitate a varying degree of spacing of the plurality of lugs 126 and the distance at which they support siphon 110 off the bottom of the water storage tank 100.

In some embodiments, a plurality of gaps 128 are present between the plurality of lugs 126 and the end of the siphon tube 114. In the detailed view of Figure 3, the gap 128 between two adjacent lugs 126 is shown.

Each of the gaps 128 allows passage of material, such as sediment at the bottom of the storage tank 110 to travel between the lugs 126 into the siphon tube 114 as suction is applied to the siphon tube 114. The size, shape, and location of each of the plurality of gaps 128 is determined by the position of the end of the siphon tube 114 with respect to the bottom of the water storage tank and the size, shape and/or positioning of the plurality of the lugs 126. The rate of flow of material through each of the plurality of gaps 128, and the amount of sediment present in the material flowing therethrough, depends on the size, shape, and location of each of the plurality of gaps 128. In one embodiment, there is a plurality of slots and/or dimensions at the first end 122 and openings/holes required further up the siphon tube that are necessary to improve, optimize or maximize suction to facilitate lifting water and debris the entire height of the siphon tube.

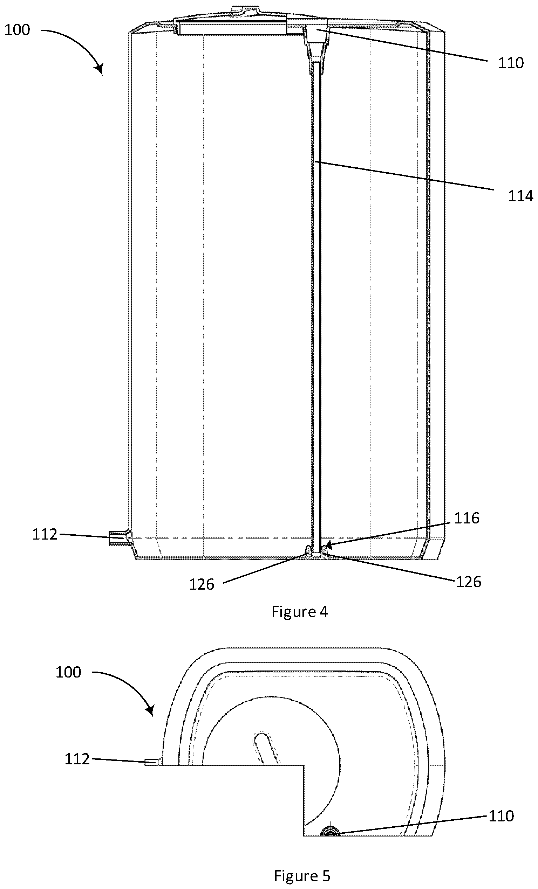

Figure 4 is side view of the water storage tank 100 with a portion cut away to show the siphon 110. Figure 5 is a top view of the water storage tank 100 with the same portion cut away as Figure 4.

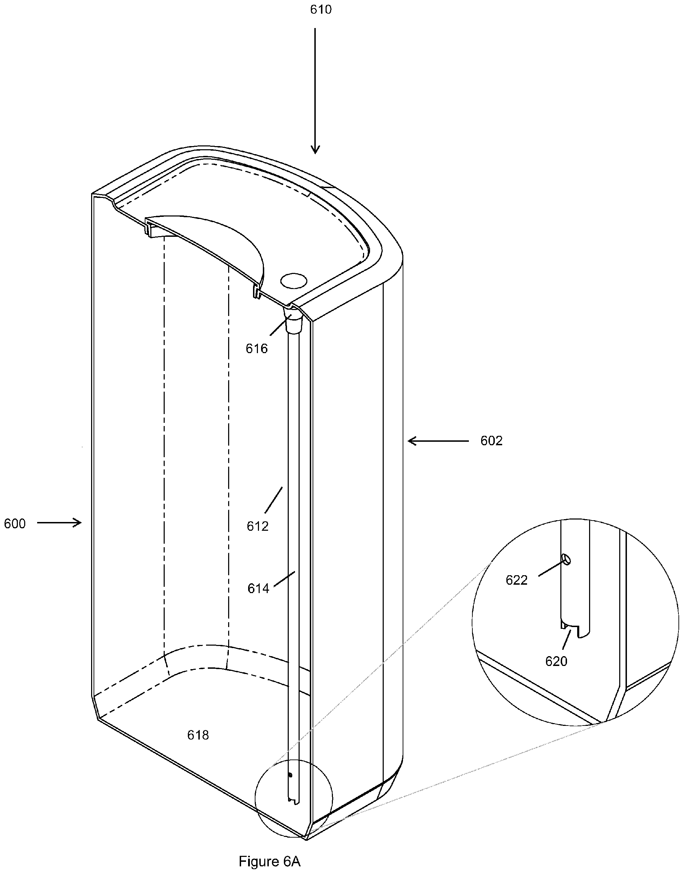

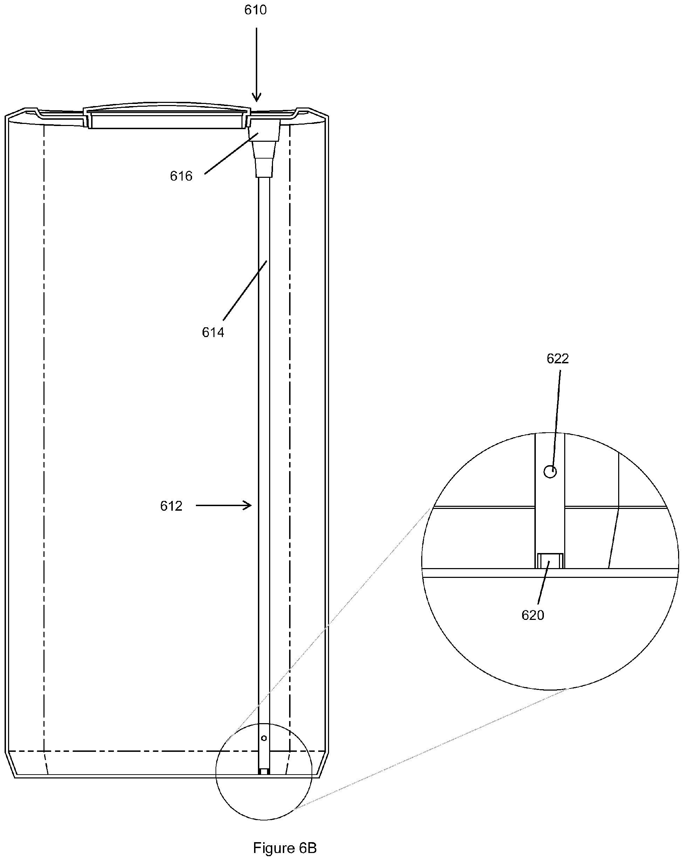

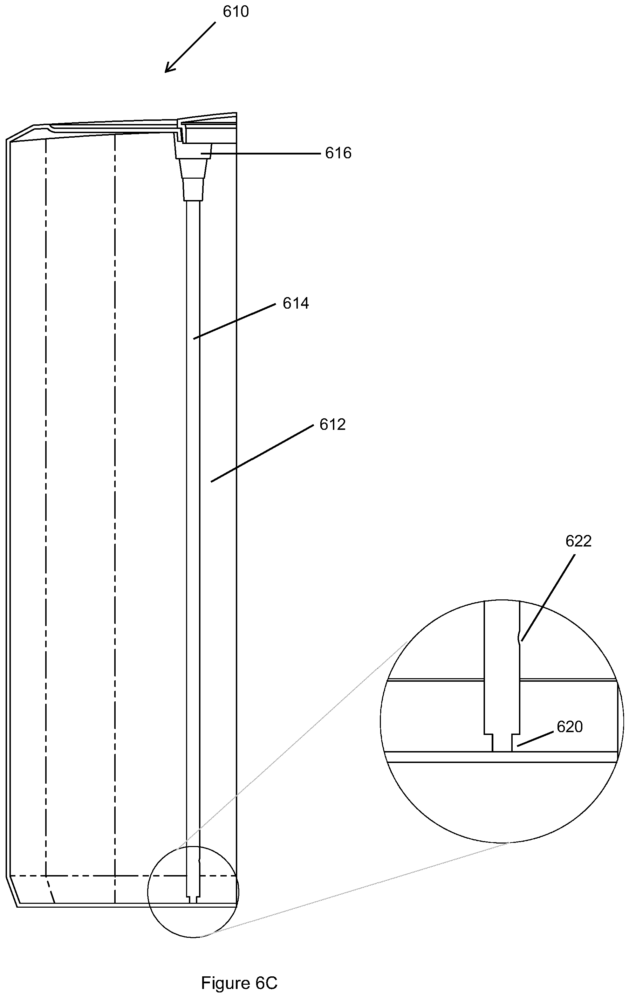

Figure 6a is a perspective cut-away view of another embodiment of a tank siphon within a water storage tank. Figure 6b is a cut-away view of the storage tank in the direction of arrow 600 in Figure 6a. Figure 6c is a cut-away view of the storage tank in the direction of arrow 602 of Figure 6a.

In the embodiment shown in Figure 6a, a storage tank 610 includes a tank siphon 612 including a siphon tube 614 with a suction adapter 616 located at one end of the tube 614. As discussed previously, the suction adapter 616 (when present) may be connected to or coupled with a suction source to draw sediment that has collected at a bottom of the storage tank out of the tank through the siphon tube 614 from a siphon receptacle end 618.

Unlike the previously described embodiments, a siphon receptacle is integrated into the siphon tube 614 to stand at the bottom of the storage tank 610. As can be seen, there are no plurality of lugs supporting the siphon tube 614. At the bottom end 618, the tube includes at least one cut out 620 or notch that positions the siphon tube 614 such that there is a clearance or spacing for sediment or debris on the bottom of the storage tank 610 to enter the tube 614 when suction is applied to the other end of the tube. The clearance between the siphon tube 614 and the bottom of the storage tank 610 is minimized or reduced to facilitate maximum or a high level of water removal from the surface of the bottom of storage tank 610 which further enhances removal of debris and sediment. The area of the cut out or notch 620 is maximized or selected to provide improved sediment removal while also minimizing or lowering the height of the cut out or notch 620 to provide maximum or a high level of water removal from the surface of the bottom of the storage tank 610 further enhancing removal of debris and sediment. As shown in Figures 6a to 6c, the siphon tube 614 may also include aeration holes 622 to facilitate improved, optimum or maximum suction draw capability up the length of the siphon tube into the suction equipment or suction source. Aeration holes 622 may be round, rectangular, slotted or of any other shape and of varying sizes determined by the diameter of siphon 612 and other storage tank 622 dimensional factors. The position of aeration holes 622 may be determined by the desired drain down water level in a storage tank 612, and are most effective when located immediately above the lowest water level after drain down to provide optimal or improved aeration.

The siphon tube is made from a material, such as, but not limited to, polyvinyl chloride (PVC), high-density polyethylene (HDPE) or any other material that is sturdy enough to stand or rest at the bottom of the storage tank without being knocked over by the force of the water flow within the storage tank.

While various reference numerals have been used to identify various elements in the embodiments, it will be understood that a similar term used to refer to elements having different reference numerals will generally refer to the same type of element and that elements may be interchangeable among the embodiments as would be known to one of skill in the art.

In the preceding description, for purposes of explanation, numerous details are set forth in order to provide a thorough understanding of the embodiments of the disclosure. However, it will be apparent to one skilled in the art that these specific details are not required in order to practice the disclosure. Thus, the breath and scope of the present disclosure should not be limited by any of the above-described exemplary embodiments but should be defined only in accordance with the appended claims and their equivalents. It will also be understood that each feature of each embodiment discussed herein, and of each reference cited herein can be used in combination with the features of any embodiment.

The above-described embodiments of the disclosure are intended to be examples only. Alterations, modifications and variations can be effected to the particular embodiments by those of skill in the art without departing from the scope of the disclosure, which is defined solely by the claims appended hereto.

## Claims

1. A tank siphon comprising:
a tube portion including:
a suction adapter at one end of the tube portion; and
a siphon tube receptacle at the other end of the tube portion.

2. The tank siphon of Claim 1 wherein the suction adapter is attached to the tube portion via a friction fit.

3. The tank siphon of Claim 2 wherein the suction adapter comprises a fitting for receiving a suction source.

4. The tank siphon of Claim 3 wherein the fitting is stepped to receive different sized suction sources.

5. The tank siphon of Claim 1 wherein the siphon tube receptable comprises a notched area.

6. The tank siphon of Claim 1 wherein the tube portion comprises a set of aeration holes.

7. A sediment collection apparatus for a water storage tank comprising:
a tank siphon including:
a tube portion including:
a suction adapter at one end of the tube portion; and
a siphon tube receptacle at the other end of the tube portion;
wherein the siphon tube receptable is positioned at a bottom of the water storage tank and the suction adapter extends through an upper surface of the water surface tank.

8. The sediment collection apparatus of Claim 7 wherein the suction adapter is attached to the tube portion via a friction fit.

9. The sediment collection apparatus of Claim 8 wherein the suction adapter comprises a fitting for receiving a suction source.

10. The sediment collection apparatus of Claim 9 wherein the fitting is stepped to receive different sized suction sources.

11. The sediment collection apparatus of Claim 7 wherein the siphon tube receptable comprises a notched area.

12. The sediment collection apparatus of Claim 7 wherein the tube portion comprises a set of aeration holes.
